# EUROPEAN PATENT SPECIFICATION

(11) **EP 0 638 630 B1**
(45) Date of publication and mention of the grant of the patent: **17.06.1998**
(21) Application number: 94202208.8
(22) Date of filing: 31.01.1991
(51) Int. Cl.: C10M 105/32, C10M 171/00, C09K 5/04, C10N 20/00, C10N 20/02, C10N 40/30

(54) **Esters as lubricants for a haloalkane refrigerant**
Ester als Schmiermittel für Haloalkangefriermittel
Esters utilisés comme lubrifiants pour réfrigerant à base d'alcane halogéné

(30) Priority: 31.01.1990 JP 22689/90; 20.02.1990 JP 39506/90; 28.02.1990 JP 50745/90; 28.02.1990 JP 50746/90; 08.10.1990 JP 270274/90; 09.11.1990 JP 305733/90; 09.11.1990 JP 305734/90
(43) Date of publication of application: 15.02.1995
(62) Divisional of application: 91300798.5
(73) Proprietor: EXXON CHEMICAL PATENTS INC., Linden New Jersey 07036 (US)
(72) Inventor: Fukuda, Masaaki, c/o Tonen Corporation, Iruma-gun, Saitama 354 (JP); Tomizawa, Hirotaka, c/o Tonen Corporation, Iruma-gun, Saitama 354 (JP); Ohta, Mitsuo, c/o Tonen Corporation, Iruma-gun, Saitama 354 (JP); Osaka, Hideki, c/o Tonen Corporation, Iruma-gun, Saitama 354 (JP); Ogano, Satoshi, c/o Tonen Corporation, Iruma-gun, Saitama 354 (JP); Satoh, Takehisa, c/o Tonen Corporation, Iruma-gun, Saitama 354 (JP); Ashibe, Kenji, c/o Tonen Corporation, Iruma-gun, Saitama 354 (JP); Nomura, Takeshi, c/o Tonen Corporation, Iruma-gun, Saitama 354 (JP)
(74) Representative: Bawden, Peter Charles

(56) References cited:
- EP-A- 0 406 479
- WO-A-90/12849
- GB-A- 2 216 541
- US-A- 4 851 144

## Description

The present invention relates to the preparation of a composition comprising a lubricant and the refrigerant 1,1,1,2-tetrafluoroethane in which lubricant has excellent compatibility with the refrigerant, low hygroscopic property, high thermal stability and lubricating property.

R11 (CCl₃F) is used as a refrigerant for air-conditioning systems in buildings, and R12 (CCl₂F₂) is used for electric refrigerators for foodstuffs or as refrigerant for automotive air-conditioning systems of the rotary or reciprocating type. However, they cause destruction of ozone in the stratosphere, and alternative substances are urgently needed.

In recent years, R123 (CF₃CHCl₂) has been considered as an alternative for R11, but it has some problems such as high price or toxicity. R22 (CHClF₂) is being considered as an alternative for R12 because of its easiness to decompose; however, the operating pressure at normal temperature is high because of its low boiling point, and pressure-resistant equipment is needed. Also, there are the problems of leaking from packings and hose components as well as problems of low electrical insulating property.

On the other hand, 1,1,1,2-tetrafluoroethane (R134a), known as an alternative for R12, does not contain chlorine which cause ozone destruction, and has passed acute and subacute toxicity tests. Thus, attention is now focused on its application.

Our EP-A-90310832 claims a refrigerant composition of R134a and a specified polyoxy propylene glycol alkyl ether of high viscosity.

At present, polyether synthetic oils of high viscosity are under development as lubricating oils. The operating temperature of a lubricating oil for a refrigerant is normally between -30 and 100°C; when a polyether synthetic oil is mixed with 1,1,1,2-tetrafluoroethane refrigerant, these substances separate from each other at high temperature and there also are problems in its hygroscopic property and lubricating property.

The requirements for lubricating oils for refrigerant are: wide temperature range for compatibility with refrigerant (compatibility), i.e. no clouding at high temperature (high solvation of refrigerant to lubricating oil), high molecular polarity of lubricating oil, no separation of lubricating oil from refrigerant at low temperature (high solubility of lubricating oil to refrigerant, and low molecular weight of lubricating oil). For this reason, high compatibility with the refrigerant is very important, and it is necessary that the substance is not separated from the refrigerant at high or low temperature and that it does not react with it. If the compatibility with the refrigerant is low, seizure may occur of a moving part cf the refrigerator, which becomes subject to high temperature.

The range of viscosity suitable or such lubricant differs according to each type of refrigerator, and a lubricating oil of suitable viscosity is required.

Further, the lubricant must not be corrosive to refrigerating equipment, must not reduce its insulating property, and must have high stability to the refrigerant.

Also, the lubricant must improve the wear-resistant property of aluminium components in pistons and bearings, made of iron and aluminium, of the refrigerator.

R134a is not miscible with mineral oils.

The object of the present invention is to provide a lubricant suitable for use with 1,1,1,2-tetrafluoroethane refrigerant having a wide compatibility temperature range with the refrigerant, having no corrosive effect on refrigerating equipment, showing no reduction in insulating property, having high stability to the refrigerant and thermal stability and improving the wear-resistant property of the equipment components.

According to the present invention we provide a method for the preparation of a refrigerant composition in which a lubricating oil is blended with R134a, wherein the lubricating oil comprises an ester of an organic carboxylic acid having a viscosity of 2 to 30 mm²/sec at 100°C, a volume resistivity of at least 1.1x10¹³ Ω.cm at 25°C and a total acid number of 0.05 mg KOH/g or less, the lubricating oil being obtained by a) either selecting the ester in that viscosity range, or by mixing esters of different viscosity ranges, or by adjusting the viscosity of the ester by adding a polymer, and b) purifying the ester by contact processing.

Preferably the ester is a diester of an aliphatic monohydric alcohol and an aliphatic or aromatic dicarboxylic acid.

The ester may be selected from esters of an aliphatic polyhydric alcohol and aliphatic carboxylic acid, partial esters of an aliphatic polyhydric alcohol and aliphatic carboxlyic acid, or complex esters of an aliphatic polyhydric alcohol and fatty acid having 3-12, preferably 5-7, carbon atoms and an aliphatic dicarboxylic acid or aromatic dicarboxlyic acid.

The ester can be of a polyoxyalkylene glycol monoether and a dicarboxylic acid of the following formula (A) : 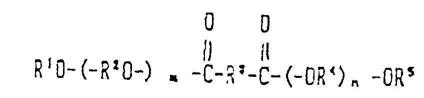 wherein R¹ and R⁵ each represents the same or different C1-8 alkyl group, R² and R⁴ each is a C2-6 alkylene group, R³ represents C2-13 alkylene group or an aromatic ring, and m and n each represents an integer of 2 or more of an ester consisting of an addition derivative of a polyoxy-alkylene of a trimethylolalkane, of the following general formula (B): 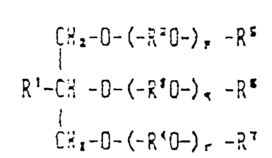 wherein R¹ represents a C1-8 alkyl group, R², R³ and R⁴ each is a C2-6 alkylene group, R⁵, R⁶, and R⁷ each is the same or different acyl group; and p, g and r each is an integer of 1 or more.

The lubricant ester preferably has a total acid number of 0.05 mg KOH/g or less, more preferably 0.03 mg KOH/g or less, a peroxide number of 1 meg./kg or less, or more preferably 0.5 meg./kg or less, an aldehyde number of 1 mg KOH/g or less, more preferably 0.8 mg KOH/g or less,
a bromine index of 10 mg/100 g or less, more preferably 5 mg/100 g or less, an ash content of 10 ppm or less, more preferably 5 ppm or less, and a moisture content of 500 ppm or less, more preferably 200 ppm or less.

A refrigerant should have a different viscosity range depending on the types of refrigerator equipment. By the present invention, a lubricating oil suitable for each type of refrigerator can be obtained either by selecting an ester with suitable viscosity range or by adjusting the viscosity by mixing an ester of different viscosity range while maintaining compatibility of the oily organic carboxylic acid ester with the refrigerant, or by adjusting the viscosity through the addition of polymers by adding a polymer selected from a polyester of a polyalkylmetacrylate, polyalkylene glycol or neopentylglycol with a carboxylic acid. As the result, a lubricating oil having high compatibility with the refrigerant and low hygroscopic property as well as good heat-resistant property can then be obtained.

The esters used can be obtained from a normal esterification reaction, purified, and its acid number, peroxide number, aldehyde number, bromine index, ash content and moisture content adjusted to the range suitable for the intended refrigeration use. The resulting lubricating oily ester shows no reduction in corrosive property and insulating property and has excellent refrigerant stability, hydrolytic stability and insulating property.

As the lubricant in this invention, the following types of esters having high molecular polarity are used:

Aliphatic carboxylic acids are used of saturated structure.

(1) First, polyesters of a polyol and straight chain or branched chain carboxylic acid can be used.

As the polyol forming these polyesters, there are, for example, trimethylolpropane, ditrimethylolpropane, trimethylolethane, ditrimethylolethane, pentaerythritol, dipentaerythritol and tripentaerythritol. C3 - 12 acids can be used, such as propionic, butyric, valeric, hexanoic, octanoic, nonanoic, decanoic, dodecanoic, isovaleric, neopentanoic, 2-methylbutyric, 2-ethylbutyric, 2-methylpentanoic, 2-methylhexanoic, 2-ethylhexanoic, isooctanoic, isononanoic, isodecanoic, 2,2'-di-methyloctanoic or 2-butyloctanoic acid.

Partial esters of an aliphatic polyol and straight chain or branched chain carboxylic acid can also be used.

As aliphatic polyols, there are, for example, trimethylolpropane, ditrimethylolpropane, trimethylolethane, ditrimethylolethane, pentaerythritol, dipentaerythritol and tripentaerythritol. Fatty acids having 3 - 9 carbon atoms can be used. It is preferably to use fatty acids such as propionic, butyric, valeric, hexanoic, heptanoic, octanoic, nonanoic, 2-methylhexanoic, 2-ethylhexanoic, isooctanoic, isononanoic, isodecanoic, 2,2'-dimethyloctanoic or 2-butyloctanoic acid.

As an ester of an aliphatic polyol and a straight chain or branched chain carboxylic acid, there are, for example, pentaethyritol, dipentaerythritol or tripentaerythritol, and it is preferably to use a fatty acid having 5 - 12, or more preferably 5 - 7 carbon atoms, e.g. valeric, hexanoic, heptanoic, 2-methylhexanoic, 2-ethylhexanoic, isooctanoic, isononanoic, isodecanoic, 2,2'-dimethyloctanoic or 2-butyloctanoic acid. A mixture of oily esters can improve compatibility with refrigerant at low temperature.

Partial esters can be obtained through reaction by adequately adjusting the reacting mol number of the aliphatic polyhydric alcohol and fatty acid.

(2) Diesters of neopentyl glycol as aliphatic polyol and a straight chain or branched chain C6 - 9 carboxylic acid, e.g. hexanoic, heptanoic, octanoic, nonanoic, 2-ethylbutylric, 2-methylhexanoic, 2-ethylhexanoic, isooctanoic or isononanoic acid can be used.

(3) Complex esters of partial esters of an aliphatic polyhydric alcohol with straight chain or branched C3 - 9 fatty acids and straight chain or branched chain aliphatic or aromatic dicarboxylic acids can be used.

As an aliphatic polyol, trimethylolpropane, trimethylolethane or pentaerythritol can be used.

As C3 - 12 aliphatic carboxylic acid, propionic, butyric, isobutyric, valeric, hexanoic, heptanoic, octanoic, nonanoic, decanoic, dodecanoic, 2-methylhexanoic, 2-ethylhexanoic, isooctanoic, isononanoic, isodecanoic, 2,2'dimethyloctanoic or 2-butyloctanoic acid can be used.

In such complex esters, it is preferably to use a C5 - 7 aliphatic carboxylic acid or more preferably, a C5 - 6 aliphatic carboxylic acid. The ester oil thus obtained can improve the compatibility with the refrigerant at low temperature.

As aliphatic carboxylic acid, valeric, hexanoic, isovaleric, 2-methylbutyric or 2-ethylbutryic acid, or a mixture thereof can be used. A mixture of such acids having 5 and 6 carbon atoms, mixed in a weight ratio of 10:90 to 90:10, can be preferably used.

As aliphatic dicarboxylic acid to be used for esterification with a polyhydric alcohol together with aliphatic carboxylic acid, there are succinic acid, adipic acid, pimelic acid, suberic acid, azelaic acid, sebacic acid, undecanoic dicarboxylic acid, dodecanoic dicarboxylic acid, tridecanoic dicarboxylic acid, carboxyoctadecanoic acid, carboxymethyloctadecanoic acid and docosanoic dicarboxylic acid. As aromatic dicarboxylic acid, ,there are phthalic or isophthalic acid, trimellitic acid as an aromatic tricarboxylic acid, and pyromellitic acid as aromatic tetracarboxylic acid.

The molar ratio of the aliphatic monocarboxylic acid and aliphatic acid or aromatic dicarboxylic acid, aromatic tricarboxylic acid and aromatic tetracarboxylic acid is preferably 6:1. In the esterification reaction, the ratio of total molar quantity of aliphatic monocarboxylic acid and aliphatic dicarboxylic acid or aromatic dicarboxylic acid to the quantity of aliphatic polyhydric alcohol is preferably 7:1.

The ester may be prepared through reaction of partially esterified substance with aliphatic monocarboxylic acid after the esterified substance is obtained by the reaction of a polyhydric alochol with aliphatic dicarboxylic acid or aromatic dicarboxylic acid or mixed acids in the predetermined ratio, or the order of reaction of the carboxylic acids may be reversed.

(4) Dialkyl esters (C16 - 22) of straight chain or branched chain aliphatic dicarboxylic acid may be used.

As the aliphatic dicarboxylic acid, there are succinic acid, glutaric acid, adipic acid, pimelic acid, suberic acid, azelaic acid, sebacic acid, undecanoic dicarboxylic acid, dodecanoic dicarboxylic acid, tridecanoic dicarboxylic acid, carboxyoctadecanoic acid, carboxymethyloctadecanoic acid, and docosanoic diacid, or an acid substance having the same property as these may be used. It is preferable to use an aliphatic dicarboxylic acid such as succinic acid, adipic acid, sebacic acid, undecanoic diacid, dodecanoic diacid, carboxyoctadecanoic acid or carboxymethyloctadecanoic acid.

As the alcohol components, there are C5-8 alcohols e.g. amyl alcohol, hexyl alcohol, heptyl alcohol and octyl alcohol as well as isomers of these substances, more preferably, isoamyl, isohexyl and octyl alcohol.

Suitable specific esters are dioctyl adipate, diisoheptyl adipate, dihexyl sebacate and diheptyl succinate.

(5) Dialkyl esters (having 18 - 26 carbons) of aromatic dicarboxylic acid can also be used.

As aromatic dicarboxylic acid, there are phthalic acid, isophthalic acid and equivalents. As alcohol component in a dialkylester, a C5 - 8 alcohol such as amyl alcohol, hexyl alcohol, heptyl alcohol, octyl alcohol and isomers of these substances can be used. It is preferable to use isoamyl, isoheptyl or octyl alcohol. Such aromatic diesters include dioctyl phthalate, diisoheptyl phthalate and diisoamyl phthalate.

(6) As alcohol components, addition products of an alkylene oxide of a monohydric alcohol selected from methanol, ethanol, propanol or butanol, or isomers of these substances, or addition products of alkylene oxide of trihydric alcohol such as glycerine or trimethylolpropane can be used. Those addition products of 1 - 10 mols, or more preferably, 1 - 6 mols of alkylene oxide selected from ethylene oxide, propylene oxide, butylene oxide or amylene oxide and isomers of these substances are used.

As esters, there are diesters obtained by esterification of addition products of an alkylene oxide to a monohydric alcohol by an aliphatic dicarboxylic acid such as adipic acid, pimelic acid, suberic acid, azelaic acid, sebacic acid, undecane dicarboxylic acid, dodecane dicarboxylic acid, carboxyoctadecane acid, carboxymethyloctadecane acid or docosane dicarboxylic acid or by an aromatic dicarboxylic acid such as phthalic acid.

Also, esters obtained through esterification of addition products of 1 - 10 mols of alkylene oxide of polyhydric alcohol such as glycerine, trimethylolpropane, etc. by straight chain or branched chain C3 - 12 aliphatic carboxylic acids can be used, e.g. propionic, butyric, valeric, hexanoic heptanoic, octanoic, nonanoic, decanoic, dodecanoic, 2-methylhexanoic, 2-ethylhexanoic, isooctanoic, isononanoic, isodecanoic, 2,2'-dimethyloctanoic or 2-butyloctanoic acid.

As the fatty acid in the above esters, a straight chain or branched chain aliphatic carboxylic acid can be used. It is preferable to use a branched chain aliphatic carboxylic acid because of high hydrolytic stability and good compatibility with a hermetic coil.

We now describe the methods to purify the esters.

Esters can be obtained by esterification reaction, e.g. by esterification of alcohols and aliphatic carboxylic acid in the presence of an acid catalyst, e.g. phosphoric acid. The esters obtained by such method have a total acid number of 0.1 - 0.5 mg KOH/g, peroxide number of 0.1 - 5 meq./kg, aldehyde number of 0.1 - 5 mg KOH/g, bromine index 1 - 100 mg/100 g, ash content 5 - 50 ppm, and moisture content 300 - 1000 ppm.

However, if the total acid number in the ester for use in a refrigerator is high, metal components may be corroded, and the function as the lubricating oil for the refrigerator is decreased through hydrolysis of the lubricating oil itself. Also, the lubricant must have a high insulating property because it is placed in the motor section of the refrigerator. Thus, the lubricating oil for refrigerator has a total acid number of 0.05 mg KOH/g or less.

Further, to increase the refrigerant stability, it is necessary to reduce the peroxide number, aldehyde number and bromine index to lower values, to reduce ash content to reduce sludge and the like, and to reduce the water content in order to maintain hydrolytic stability and insulating property.

For this purpose, it is necessary to purify the above esters obtained by normal esterification reaction and to adjust the above indices for properties of the ester to a range well suitable for a lubricant oil for a refrigerant. The organic carboxylic acid ester is purified through contact processing with e.g. silica gel, activated alumina, activated carbon or a zeolite. The contact condition in this case may be determined according to each case, and it is preferable to perform the processing at 100°C or less.

Normally, the viscosity at 100°C of the lubricant for use in a refrigerator is 2 - 9 mm²/s, or more preferably 3 - 7 mm²/s, and for use in a car air-conditioner is preferably 7 - 30 mm²/s. In a car air-conditioner, the viscosity range of the oily ester is preferably 7 - 15 mm²/s, or more preferably 8 - 11 mm²/s for the reciprocating type compressor, and 15 - 30 mm²/s or more preferably 20 -27 mm²/s for rotary type compressor.

The viscosity range of the lubricants according to the present invention is thus 2 - 30 mm²/s. A viscosity less than 2 mm²/s is not desirable because of low refrigerant viscosity, poor lubricating and sealing properties, and low thermal stability; more than 30 mm²/s is not desirable because the compatibility of the ester with the refrigerant is decreased.

Even when it is within the above range, the operating viscosity range differs according to each equipment used. If it exceeds 9 mm²/s in case of a refrigerator, the friction loss at the sliding portion may be increased.

Further, if it is less than 7 mm²/s in case of a car air-conditioner of the reciprocating type, a problem arises with lubricating property, and if it exceeds 15 mm²/s, a problem arises of increased friction loss on the sliding portion. In case of a rotary type air-conditioner, a problem arises with sealing property if it is less than 15 mm²/s, and the problem of compatibility with refrigerant if it is more than 30 mm²/s.

Esters may be used alone, or the above desired esters may be suitably combined in order to adjust the viscosity range according to each application.

For example, when viscosity is high in case of complex type esters of type (13) above, the viscosity range can be adjusted for each application by adding an ester of an aliphatic polyhydric alcohol with an aliphatic carboxylic acid having 3 - 9 carbons while maintaining compatibility with the refrigerant. Such esters preferably have a viscosity of 6 mm²/s or less at 100°C.

To suitably adjust the viscosity of the lubricant, polymers for maintaining the compatibility with refrigerant may be added, in any suitable proportion, to the esters. It is preferable that such polymer has a viscosity of 10 mm²/s or more at 100°C.

As a polymer, a polyester of an aliphatic dicarboxylic acid with a polyalkylmethacrylate (e.g. containing a C4 - 8 alkyl group), polyalkylene glycol (e.g. copolymer comprising polypropylene glycol or polyethyleneglycol and polypropyleneglycol, or copolymer containing polypropyleneglycol and polytetramethyleneglycol), or neopentylglycol and represented by the following formula may be used. 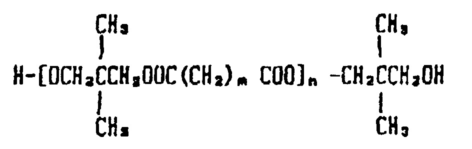 wherein m represents an integer of 1 - 20, and n an integer of 1 - 10.

Provided that the desired viscosity is obtained, normally, it is within the range between 1 wt% and 90 wt%.

To reduce wear on iron/aluminium contacts in the refrigerator, it is preferable to add to the lubricant one or more sulfur type anti-wear agents such as of the general formula:

(RO)₃ P = S

wherein each R represents the same or different alkyl group, allyl group or phenyl group. Suitable types of the sulfur type anti-wear agent are a trialkylphosphorothionate, triphenylphosphorothionate and alkyldiallylphosphorothionate.

Sulfides such as diphenyl sulfide, diphenyl disulfide, di-n-butyl sulfide, di-n-butyl disulfide, di-tert-dodecyl disulfide or di-tert-dodecyl trisulfide, a sulfurized oil such as sulfurized sperm oil or sulfurized dipentene, dithiocarbonates such as an xanthate, or a zinc thiophosphate type anti-wear agent such as a primary or secondary alkyl zinc thiophosphate, alkyl-allyl zinc thiophosphate or allyl zinc thiophosphate can be used.

It is preferable to use such anti-wear agent in the following ratio to the ester oil: 0.01 - 5 wt %, more preferably, 0.1 - 3 wt %.

As antioxidant, an amine type antioxidant such as dioctyldiphenylamine, phenyl-α-naphthylamine, alkyldiphenylamine or N-nitrosodiphenylamine, phenol type antioxidant such as 2,6-di-t-butylparacresol, 4,4'-methylene-bis-(2-6-di-butylphenol), 2,6-di-t-butyl-α-dimethylamineparacresol or 2,6-di-t-butylphenol, phosphorus type antioxidant such as tris-(2,4-di-t-butylphenyl)phosphite, tris-nonylphenyl phosphite or triphenyl phosphite can be used. It is preferable to use such antioxidant in the following ratio to the ester: 0.01 - 10 wt %, or more preferably 0.01 - 1.0 wt%.

Suitable corrosion inhibitors are isostearate, n-octadecyl ammonium stearate, duomin T-diolate, lead naphthenate, sorbitan oleate, pentaerythrite oleate, oleyl sarcosine, alkyl succinic acid, alkenyl succinic acid and derivatives of these substances. The preferable mixing ratio to the ester oil is 0.001-1.0 wt %, or more preferably 0.01-0.5 wt %.

As defoaming agent, a silicone can be used. The preferable mixing ratio to the ester oil is: 0.0001-0.003 wt %, or more preferably 0.0001-0.001 wt %.

As metal deactivator, benzotriazole, benzotriazole derivative, thiadiazole, thiadiazole derivative, triazole, triazole derivative or dithiocarbamate, may be used, preferably in the following ratio to the ester oil: 0.01-1.0 wt %.

Further, as rust preventive, succinic acid, succinic acid ester, oleic acid tallow amide, barium sulfonate or calcium sulfonate may be used. These substances are used in the following ratio: 0.01-10 wt %, or more preferably 0.01-1.0 wt %.

The invention will be illustrated by the following examples. First, description is given of the methods used to evaluate the refrigerant oils as used in the Examples.

### Compatibility test method

A specimen of lubricant oil and the refrigerant (1,1,1,2-tetrafluoroethane) are placed in a glass tube in the ratio of specimen oil to refrigerant of 3 and 10 wt % to make the total volume of 2 ml, and these are mixed together. The glass tube is placed in a constant-temperature chamber provided with heating and cooling devices, and the separation temperature of specimen oil and refrigerant is measured.

### Hydroscopic property test method

In a desiccator containing water, a specimen of 30 ml lubricant oil is placed, and its hygroscopic property is measured over time at room temperature and at 95% humidity.

### Example

The specimen oil 1 is an ester obtained through the reaction of 1 mol of pentaerythritol with 4 mols of aliphatic C₅-C₉ acid after contact processing by a zeolite.

The specimen oils 2 and 6 are esters obtained by reaction of 1 mol of dipentaerythritol with 6 mols of aliphatic C₅-C₆ acid. The specimen oil 2 is obtained by further contact processing with a zeolite.

The specimen oils 3 and 7 are esters obtained by reaction of 1 mol of pentaerythritol with 4 mols of C₅-C₆ fatty acid. The specimen oil 3 is obtained by further contact processing with a zeolite.

The specimen oil 4 is obtained by adding 0.02 wt % of metal deactivator benzotriazole and 0.2 wt % of antioxidant diphenylamine to the specimen oil 1.

The specimen oil 5 is obtained by adding the same additives as those for the above specimen oil 4 to the specimen oil 2.

The specimen oil 8 is obtained by adding the same additives as those for the above specimen oil 4 to the specimen oil 6.

These specimen oils performance was evaluated by the following methods :

### Total acid number measuring method

Total acid number was determined by the neutralization number of JIS K 2501.

### Peroxide number measuring method

Iodine titration method was used, by which potassium iodide was added to the specimen and the isolated iodine was titrated. The peroxide number is expressed in milliequivalent to 1 kg of the specimen.

### Aldehyde number measuring method

Sodium hydroxide titration method was adopted by which hydroxylamine hydrochloride was added to the specimen and the isolated acid was titrated by sodium hydroxide.

### Bromine index measuring method

Bromine index was determined by ASTM D 1492.

### Ash content measuring method

Ash content was determined by the ash content test method of JIS K 2272.

### Moisture measuring method

Moisture was determined by Karl Fischer method of the moisture testing methods of JIS K 2275.

### Volume resistivity measuring method

Volume resistivity test of the electric insulating oil testing methods of JIS C 2101 was used.

### Hydrolytic stability

In accordance with ASTM D 2619, the mixture of 75 g of the specimen and 25 g of water was heated together with copper catalyst at 93°C for 48 hours, and total acid number of the specimen oil was measured.

### Refrigerant stability

The mixure of the specimen and R-134a mixed at mixing ratio of 2:1 was sealed in an autoclave together with iron, copper and aluminum catalysts and was heated at 175°C for 480 hours. Then, external appearance of the catalysts and total acid number and hue of the specimen oil were measured (autoclave method).

On the mixtures of the specimen oils as prepared above with 1,1,1,2-tetrafluoroethane refrigerant, a sealed tube test was performed at high temperature.

The test method (sealed tube test) is as follows: First, 1 g of refrigerant oil, 1 g of 1,1,1,2-tetrafluoroethane, and one piece each of iron, copper and aluminum test pieces (1.7 mm in diameter; 40 mm in length) were sealed in a glass tube, and this was heated at 175°C for 14 days (336 hours). After the test was completed, the change of color of the specimen oil was measured, and the conditions of the metal pieces were examined.

The properties of the specimen oils and the test results are shown in the table below.

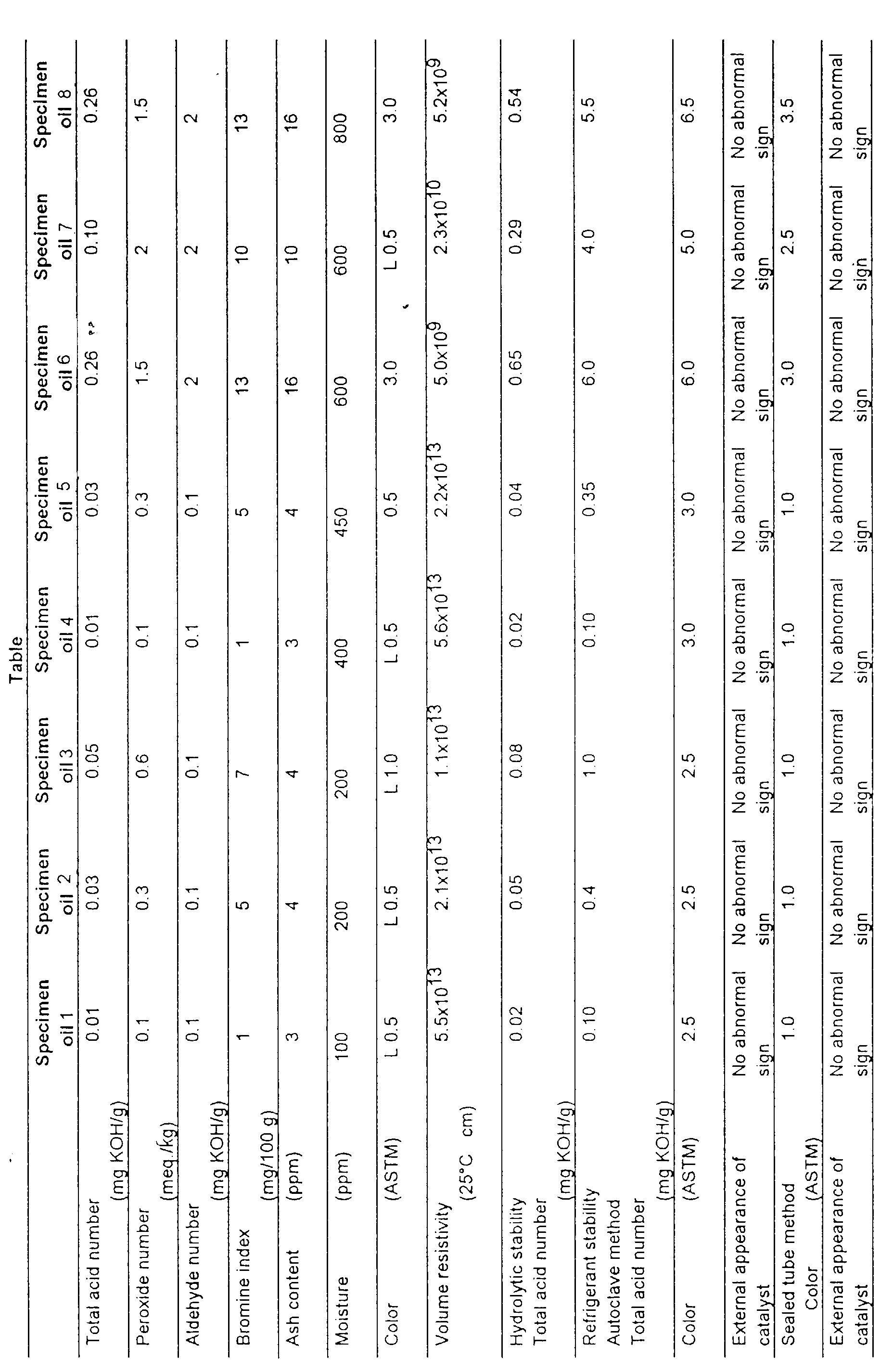

Thus, it is evident that the lubricating oils for refrigerator show less increase in total acid number, less change in hue after the test, keeping good external appearance of catalyst, and showing high hydrolytic stability, refrigerant stability and insulating property.

## Claims

1. A method for the preparation of a refrigerant composition in which a lubricating oil is blended with R134a, wherein the lubricating oil comprises an ester of an organic carboxylic acid having a viscosity of 2 to 30 mm²/sec at 100°C, a volume resistivity of at least 1.1x10¹³ Ω.cm at 25°C and a total acid number of 0.05 mg KOH/g or less, the lubricating oil being obtained by a) either selecting the ester in that viscosity range, or by mixing esters of different viscosity ranges, or by adjusting the viscosity of the ester by adding a polymer, and b) purifying the ester by contact processing.

2. A method as claimed in claim 1, wherein the lubricating oil has a moisture content of 500ppm or less.

3. A method as claimed in claim 1 or claim 2, wherein the lubricating oil has a peroxide number of 1 meq/kg or less.

4. A method as claimed in any of the preceding claims, wherein the lubricating oil has an aldehyde number of 1 mg KOH/g or less.

5. A method as claimed in any of the preceding claims, wherein the lubricating oil has an bromine number of 10 mg /100g or less.

6. A method as claimed in any of the preceding claims, wherein the lubricating oil has an ash content of 10 ppm or less.

7. A method as claimed in any of the preceding claims, wherein the ester is a polyester of a polyol and one or more straight or branched chain carboxylic acids.

8. A method as claimed in any of claims 1 to 6, wherein the ester is a diester of a neopentyl glycol and a straight or branched chain C₆ to C₉ carboxylic acid.

9. A method as claimed in any of claims 1 to 6, wherein the ester is a complex ester of partial esters of an aliphatic polyhydric alcohol with straight or branched chain C₃ to C₉ carboxylic acid.

10. A method as claimed in any of claims 1 to 6, wherein the ester is a dialkyl ester (C₁₆ to C₂₂) of straight or branched chain aliphatic carboxylic acids.

11. A method as claimed in any of claims 1 to 6, wherein the ester is a dialkyl ester (C₁₈ to C₂₆) of an aromatic carboxylic acid.

12. A method as claimed in any of the preceding claims, wherein the contact processing is with silica gel, activated alumina, activated carbon or a zeolite.

13. The use of a lubricating oil in the preparation of a refrigerant composition by blending with R134a, wherein the lubricating oil comprises an ester of an organic carboxylic acid having a viscosity of 2 to 30 mm²/sec at 100°C, a volume resistivity of at least 1.1x10¹³ Ω.cm at 25°C and a total acid number of 0.05 mg KOH/g or less, the lubricating oil being obtained by a) either selecting the ester in that viscosity range, or by mixing esters of different viscosity ranges, or by adjusting the viscosity of the ester by adding a polymer, and b) purifying the ester by contact processing.

## Patentansprüche

1. Verfahren zur Herstellung einer Kühlmittelzusammensetzung, bei dem ein Schmieröl mit R134a gemischt wird, wobei das Schmieröl einen Ester einer organischen Carbonsäure mit einer Viskosität von 2 bis 30 mm²/sec bei 100°C, einem spezifischen Durchgangswiderstand von mindestens 1,1·10¹³ Ω·cm bei 25°C und einer Gesamtsäurezahl von 0,05 mg KOH/g oder weniger umfaßt, wobei das Schmieröl erhalten wird, indem a) entweder der Ester in diesem Viskositätsbereich gewählt wird oder Ester mit unterschiedlichen Viskositätsbereichen gemischt werden oder die Viskosität des Esters durch Zugabe eines Polymers eingestellt wird, und b) der Ester durch Kontaktverarbeitung gereinigt wird.

2. Verfahren nach Anspruch 1, bei dem das Schmieröl einen Feuchtigkeitsgehalt von 500 ppm oder weniger hat.

3. Verfahren nach Anspruch 1 oder 2, bei dem das Schmieröl eine Peroxidzahl von 1 mÄq/kg oder weniger hat.

4. Verfahren nach einem der vorhergehenden Ansprüche, bei dem das Schmieröl eine Aldehydzahl von 1 mg KOH/g oder weniger hat.

5. Verfahren nach einem der vorhergehenden Ansprüche, bei dem das Schmieröl eine Bromzahl von 10 mg/100 g oder weniger hat.

6. Verfahren nach einem der vorhergehenden Ansprüche, bei dem das Schmieröl einen Aschegehalt von 10 ppm oder weniger hat.

7. Verfahren nach einem der vorhergehenden Ansprüchen, bei dem der Ester ein Polyester von Polyol und einer oder mehreren geradkettigen oder verzweigten Carbonsäuren ist.

8. Verfahren nach einem der Ansprüche 1 bis 6, bei dem der Ester ein Diester von Neopentylglykol und einer geradkettigen oder verzweigten C₆- bis C₉-Carbonsäure ist.

9. Verfahren nach einem der Ansprüche 1 bis 6, bei dem der Ester ein komplexer Ester aus Partialestern von aliphatischem mehrwertigen Alkohol mit geradkettigen oder verzweigtkettigen C₃- bis C₉-Carbonsäuren ist.

10. Verfahren nach einem der Ansprüche 1 bis 6, bei dem der Ester ein Dialkylester (C₁₆ bis C₂₂) von geradkettigen oder verzweigten aliphatischen Carbonsäuren ist.

11. Verfahren nach einem der Ansprüche 1 bis 6, bei dem der Ester ein Dialkylester (C₁₈ bis C₂₆) einer aromatischen Carbonsäure ist.

12. Verfahren nach einem der vorhergehenden Ansprüche, bei dem die Kontaktverarbeitung mit Siliciumdioxidgel, aktiviertem Aluminiumoxid, Aktivkohle oder einem Zeolithen erfolgt.

13. Verwendung eines Schmieröls zur Herstellung einer Kühlmittelzusammensetzung durch Mischen mit R134a, wobei das Schmieröl einen Ester einer organischen Carbonsäure mit einer Viskosität von 2 bis 30 mm²/sec bei 100°C, einem spezifischen Durchgangswiderstand von mindestens 1,1·10¹³ Ω·cm bei 25°C und einer Gesamtsäurezahl von 0,05 mg KOH/g oder weniger umfaßt, wobei das Schmieröl erhalten wird, indem a) entweder der Ester in diesem Viskositätsbereich gewählt wird oder Ester mit unterschiedlichen Viskositätsbereichen gemischt werden oder die Viskosität des Esters durch Zugabe eines Polymers eingestellt wird, und b) der Ester durch Kontaktverarbeitung gereinigt wird.

## Revendications

1. Procédé pour la préparation d'une composition de réfrigérant, dans lequel une huile lubrifiante est mélangée à du R134a, l'huile lubrifiante comprenant un ester d'un acide carboxylique organique ayant une viscosité de 2 à 30 mm²/s à 100°C, une résistivité volumique d'au moins 1,1x10¹³ Ω.cm à 25°C et un indice d'acide total égal ou inférieur à 0,05 mg de KOH/g, l'huile lubrifiante étant obtenue a) en choisissant l'ester dans cet intervalle de viscosité, ou en mélangeant des esters d'intervalles de viscosité différents, ou bien en ajustant la viscosité de l'ester par addition d'un polymère, et b) en purifiant l'ester par traitement par contact.

2. Procédé suivant la revendication 1, dans lequel l'huile lubrifiante a une teneur en humidité égale ou inférieure à 500 ppm.

3. Procédé suivant la revendication 1 ou la revendication 2, dans lequel l'huile lubrifiante a un indice de peroxyde égal ou inférieur à 1 meq/kg.

4. Procédé suivant l'une quelconque des revendications précédentes, dans lequel l'huile lubrifiante a un indice d'aldéhyde égal ou inférieur à 1 mg de KOH/g.

5. Procédé suivant l'une quelconque des revendications précédentes, dans lequel l'huile lubrifiante a un indice de brome égal ou inférieur à 10 mg/100 g.

6. Procédé suivant l'une quelconque des revendications précédentes, dans lequel l'huile lubrifiante a une teneur en cendres égale ou inférieure à 10 ppm.

7. Procédé suivant l'une quelconque des revendications précédentes, dans lequel l'ester est un polyester d'un polyol et d'un ou plusieurs acides carboxyliques à chaîne droite ou ramifiée.

8. Procédé suivant l'une quelconque des revendications 1 à 6, dans lequel l'ester est un diester d'un néopentylglycol et d'un acide carboxylique en C₆ à C₉ à chaîne droite ou ramifiée.

9. Procédé suivant l'une quelconque des revendications 1 à 6, dans lequel l'ester est un ester complexe d'esters partiels d'un alcool polyhydroxylique aliphatique avec un acide carboxylique en C₃ à C₉ à chaîne droite ou ramifiée.

10. Procédé suivant l'une quelconque des revendications 1 à 6, dans lequel l'ester est un ester de dialkyle (C₁₆ à C₂₂) d'acides carboxyliques aliphatiques à chaîne droite ou ramifiée.

11. Procédé suivant l'une quelconque des revendications 1 à 6, dans lequel l'ester est un ester de dialkyle (C₁₈ à C₂₆) d'un acide carboxylique aromatique.

12. Procédé suivant l'une quelconque des revendications précédentes, dans lequel le traitement par contact est effectué avec du gel de silice, de l'alumine activée, du charbon actif ou une zéolite.

13. Utilisation d'une huile lubrifiante dans la préparation d'une composition de réfrigérant par mélange avec du R134a, dans laquelle l'huile lubrifiante comprend un ester d'un acide carboxylique organique ayant une viscosité de 2 à 30 mm²/s à 100°C, une résistivité volumique d'au moins 1,1x10¹³ Ω.cm à 25°C et un indice d'acide total égal ou inférieur à 0,05 mg de KOH/g, l'huile lubrifiante étant obtenue a) en choisissant l'ester dans cet intervalle de viscosité, ou en mélangeant des esters d'intervalles de viscosité différents, ou bien en ajustant la viscosité de l'ester par addition d'un polymère, et b) en purifiant l'ester par traitement par contact.
